# EUROPÄISCHE PATENTANMELDUNG

(11) **EP 4 234 447 A1**
(43) Veröffentlichungstag der Anmeldung: **30.08.2023**
(21) Anmeldenummer: 22159231.4
(22) Anmeldetag: 28.02.2022
(51) Int. Cl.: B65G 11/12, B65G 47/52, B65G 47/68, B65G 43/08, B65G 47/44

(54) **ZUSAMMENFÜHREN VON STÜCKGUTSTRÖMEN**

(71) Anmelder: Körber Supply Chain Logistics GmbH, 78467 Konstanz (DE)
(72) Erfinder: SKRDLANT, Rolf-Peter, 88662 Überlingen (DE); FISCHER, Felix, 78462 Konstanz (DE); EISSER, Dirk-Udo, 78479 Reichenau (DE)
(74) Vertreter: Müller Schupfner & Partner Patent- und Rechtsanwaltspartnerschaft mbB

(57) **Zusammenfassung**

Um zwei Stückgüterströme zusammenzuführen werden folgende Verfahrensschritte durchgeführt:
- Fördern eines unteren Stückgutstroms (3) auf einer unteren Förderstrecke (2);
- Fördern eines oberen Stückgutstroms (5) auf einer über der unteren Förderstrecke (2) liegenden oberen Förderstrecke (4);
- Zuführen von in dem oberen Stückgutstrom (5) geförderten Stückgütern in einen zusammengeführten Förderbereich (6) via eine obere Seite (73) einer schwenkbaren Klappe (71);
-Zuführen von in dem unteren Stückgutstrom (3) geförderten Stückgütern in den zusammengeführten Förderbereich (6) indem die Klappe (71) durch die Wirkung eines oder mehrerer auf der unteren Förderstrecke (2) geförderter Stückgüter (92) angehoben wird und das eine oder die mehreren auf der unteren Förderstrecke (2) geförderten Stückgüter (92) unter der Klappe (71) hindurch dem zusammengeführten Förderbereich (6) zugeführt werden;
- wobei ein Antriebsmittel (82) der unteren Förderstrecke (2) durch ein Kontrollsystem (8) so angesteuert wird, dass Stückgüter (9) von der oberen Förderstrecke (4) und der unteren Förderstrecke koordiniert dem zusammengeführten Förderbereich (6) zugeführt werden.

## Beschreibung

Die Erfindung bezieht sich auf das technische Gebiet des Zusammenführens von Stückgutströmen.

In Logistikzentren für Stückgüter ist es manchmal erwünscht, dass übereinander angeordnete Sorter Stückgüter in dieselbe Endstelle und/oder Rutsche bzw. Speicherrutsche abwerfen können. Hierfür müssen übereinander angeordneten Sendungsströme, respektive Kanäle der übereinander angeordneten Sorter zusammengeführt werden. Dies erfolgt in der Praxis manchmal indem zwei parallele Kanäle oder Rutschen an ihrem Ende nebeneinander zusammenlaufen, beziehungsweise in einen gemeinsamen Entnahmebereich münden. Weil die Kanäle oder Rutschen parallel sind, steht für jeden Kanal nur die halbe verfügbare Teilung pro Endstelle zur Verfügung. Deshalb sind die Kanäle relativ schmal. Dies führt zu Problemen beim Abwurf in die Kanäle und zum Verklemmen von Sendungen in den Kanälen. Um dies zu vermeiden, wäre es wünschenswert die Kanäle vertikal übereinander anzuordnen, weil in der Höhe ausreichend Bauraum verfügbar ist, und für jeden Kanal dann die komplette Teilung zur Verfügung steht. Hierfür muss als Konsequenz dann jedoch eine sendungsschonende Zusammenführung der vertikal übereinander liegenden Ströme, beziehungsweise Kanäle realisiert werden, vorzugsweise als passiver vertikaler Merge. Diese Zusammenführung muss zuverlässig, einfach und kostengünstig sein, soll also keine zusätzlichen Aktoren und damit verbundene Sicherheitstechnik benötigen.

DE 10 2015 203 553 A1 offenbart eine Vorrichtung zum Zuführen eines Stückgutstroms zu einem anderen Stückgutstrom. Dabei strömt der andere Stückgutstrom in eine selbe erste Richtung wie der Stückgutstrom. Weiterhin ist der andere Stückgutstrom der bezüglich einer zur ersten Richtung senkrechten zweiten Richtung unter dem Stückgutstrom angeordnet. Die Vorrichtung umfasst ein bewegliches Rutschelement, über die der Stückgutstrom dem anderen Stückgutstrom zugeführt wird. Das Rutschelement umfasst unabhängig voneinander um eine Achse dreh- und/oder biegbare Segmente, wobei die Achse senkrecht zur ersten Richtung und senkrecht zur zweiten Richtung ist. Die Segmentierung des Rutschelements in unabhängig dreh- und/oder biegbare Segmente bewirkt, dass Stückgüter lediglich die Menge an Segmenten bewegen müssen, die ihrer Größe entspricht. Daher kann das Rutschelement für große Stückgüter ausgebildet sein, ohne dadurch die Förderung kleiner Stückgüter zu erschweren oder zu verunmöglichen.

WO 2013/023661 A1 offenbart ein Querbandsortersystem, in welchem Gegenstände auf Quergurtförderer mittels Top-Load-Ladestationen geladen werden.

EP 2 444 341 A1 offenbart eine Vorrichtung zum Behandeln von Stückgütern einer Transporteinheit, insbesondere eines Wechselbehälters, mit einer mobilen Fördereinheit, die zum Entladen der Transporteinheit in dieselbe hineingefahren wird, unter der Kontrolle einer Bedienperson darin gestapelte Stückgüter aufnimmt und diese aus der Transporteinheit heraus in einer Entladerichtung zur weiteren Verarbeitung fördert. Damit das Abführen von Stückgütern aus der Transporteinheit heraus bei der Entladung inhomogen bzw. ungeordnet gestapelter Stückgüter mit einem geringen Arbeitsaufwand erfolgen kann, weist die Fördereinheit einen Bodenförderer auf, der vom Stückgutstapel gestürzte Stückgüter in loser Anordnung fördert.

DE 25 22 579 A1 offenbart ein Verfahren zur Steuerung der Übergabe eines auf einem Zuförderer angeförderten Artikels auf einen Sammelförderer, der von mehreren Zuförderern beschickt wird, wobei die lichten Abstände zwischen den bereits auf dem sich bewegenden Sammelförderer befindlichen Artikel abgetastet werden, und daß bei Ermittlung einer zur Aufnahme des zu übergebenden Artikels ausreichenden Lücke dieser Artikel in diese Lücke eingebracht wird.

US 2013/0319815 A1 offenbart eine Vorrichtung zum Verarbeiten von Früchten, der Führungsmittel umfasst, und der verwendet wird, um die Artikel mit einer reduzierten Kollisionswahrscheinlichkeit von einem ersten Förderer auf einen zweiten Förderer zu transferieren.

Der Erfindung liegt die Aufgabe zugrunde, übereinander verlaufende Stückgutströme effizient zusammenzuführen.

Diese Aufgabe wird durch die Merkmale der in den unabhängigen Ansprüchen beschriebenen Konzepte gelöst.

Gemäss einem Aspekt der Erfindung wird ein Zusammenführungssystem zum Zusammenführen von zwei Stückgutströmen vorgestellt. Das Zusammenführungssystem umfasst eine untere Förderstrecke, eine über der unteren Förderstrecke angeordnete obere Förderstrecke, ein Kontrollsystem, ein ansteuerbares unteres Antriebsmittel zum Antreiben der unteren Förderstrecke, einen zusammengeführten Förderbereich und einen Klappmechanismus mit einer Klappe. Das Zusammenführungssystem ist ausgestaltet auf der unteren Förderstrecke geförderte Stückgüter und auf der oberen Förderstrecke geförderte Stückgüter dem zusammengeführten Förderbereich zuzuführen.

Der Klappmechanismus umfasst eine in der oberen Förderstrecke angeordnete Achse, um welche die Klappe schwenkbar angeordnet ist, sodass eine obere Seite der Klappe Teil einer Förderfläche der oberen Förderstrecke bildet. Der Klappmechanismus umfasst eine Grundposition, in welcher die Klappe von der Achse zu dem der Achse gegenüberliegenden Ende hin auf die untere Förderstrecke zulaufend angeordnet ist. Zumindest in der Grundposition sind auf der oberen Förderstrecke geförderte Stückgüter via die obere Seite der Klappe in einer Richtung von der Achse zu dem der Achse gegenüberliegenden Ende der Klappe dem zusammengeführten Förderbereich zuführbar. Der Klappmechanismus und die untere Förderstrecke sind ausgestaltet und relativ zueinander so angeordnet, dass die Klappe durch die Wirkung eines oder mehrerer auf der unteren Förderstrecke geförderter Stückgüter angehoben wird und das eine oder die mehreren auf der unteren Förderstrecke geförderten Stückgüter unter der Klappe hindurch dem zusammengeführten Förderbereich zugeführt werden. Das Kontrollsystem ist eingerichtet, das untere Antriebsmittel so anzusteuern, dass das Zuführen von Stückgütern von der oberen Förderstrecke zu dem zusammengeführten Förderbereich und das Zuführen von Stückgütern von der unteren Förderstrecke an den zusammengeführten Förderbereich koordiniert vorgenommen wird.

Gemäss einem Aspekt der Erfindung wird ein Fördersystem vorgestellt, das mindestens ein Speicherruschensystem gemäss dem oben beschriebenen Aspekt umfasst, sowie ein oberes Zuführsystem und ein unteres Zuführsystem. Das obere Zuführsystem und das untere Zuführsystem umfassen jeweils mehrere Ausgänge. Ein Ausgang des oberen Zuführsystems ist ausgestaltet, einem stromaufwärts der Klappe angeordneten Eingang der oberen Förderstrecke Stückgüter zuzuführen und ein Ausgang des unteren Zuführsystem ist ausgestaltet, einem stromaufwärts der Klappe angeordneten Eingang der unteren Förderstrecke Stückgüter zuzuführen.

Gemäss einem Aspekt der Erfindung wird ein Verfahren zum Zusammenführen von zwei Stückgutströmen vorgestellt. Im Rahmen des Verfahrens wird ein unterer Stückgutstroms auf einer unteren Förderstrecke gefördert und ein oberer Stückgutstrom wird auf einer über der unteren Förderstrecke liegenden oberen Förderstrecke gefördert. In dem oberen Stückgutstrom geförderte Stückgüter werden in einen zusammengeführten Förderbereich via eine obere Seite einer schwenkbaren Klappe gefördert. In dem unteren Stückgutstrom geförderte Stückgüter werden in den zusammengeführten Förderbereich zugeführt, indem die Klappe durch die Wirkung eines oder mehrerer auf der unteren Förderstrecke geförderter Stückgüter angehoben wird und dabei das eine oder die mehreren auf der unteren Förderstrecke geförderten Stückgüter unter der Klappe hindurch dem zusammengeführten Förderbereich zugeführt werden. Ein Antriebsmittel der unteren Förderstrecke wird durch ein Kontrollsystem so angesteuert, dass Stückgüter von der oberen Förderstrecke und der unteren Förderstrecke koordiniert dem zusammengeführten Förderbereich zugeführt werden.

In den Unteransprüchen sind weitere vorteilhafte Maßnahmen aufgelistet, die beliebig miteinander kombiniert werden können, um weitere Vorteile zu erzielen.

Im Folgenden wird der auf der oberen Förderstrecke geförderte Stückgutstrom auch "oberer Stückgutstrom" und der auf der unteren Förderstrecke geförderte Stückgutstrom auch "unterer Stückgutstrom" genannt.

Gemäss einem Ausführungsbeispiel umfasst die Klappe keine Aktoren oder sonstigen aktiv angetriebenen Elemente zum Fördern von Stückgütern des oberen Stückgutstroms auf der Klappe. Gemäss einem Ausführungsbeispiel werden Stückgüter des oberen Stückgutstroms mittels Schwerkraft oder Staudruck auf der Klappe gefördert, beispielsweise indem sie auf Gleiten oder Rollenbahn. Diese Ausführungsbeispiele ermöglichen eine besonders kostengünstige Bauweise des Klappmechanismus.

Gemäss einem Ausführungsbeispiel ist der Klappmechanismus passiv. Dies bedeutet, dass er keine Aktoren zum aktiven Heben und/oder Senken der Klappe umfasst. Gemäss einem Ausführungsbeispiel ist das Zusammenführungssystem ausgestaltet, dass die Klappe einzig durch mindestens ein auf der unteren Förderstrecke gefördertes Stückgut angehoben und durch die optional durch eine Feder oder sonstige Vorspannkraft kompensierte Schwerkraft wieder in ihre Grundposition gebracht wird. Diese Ausführungsbeispiele ermöglichen eine besonders kostengünstige Bauweise des Klappmechanismus.

Gemäss einem Ausführungsbeispiel umfasst das Zusammenführungssystem ein ansteuerbares oberes, vorzugsweise nicht auf der Klappe angeordnetes Antriebsmittel zum aktiven Antreiben der oberen Förderstrecke. Das Kontrollsystem ist eingerichtet, das obere Antriebsmittel so anzusteuern, dass das Zuführen von Stückgütern von der oberen Förderstrecke an den zusammengeführten Förderbereich und das Zuführen von Stückgütern von der unteren Förderstrecke an den zusammengeführten Förderbereich koordiniert vorgenommen wird. Dies ermöglicht eine höhere Flexibilität bei der Koordination des Zuführens von Stückgütern von der oberen Förderstrecke an den zusammengeführten Förderbereich und des Zuführens von Stückgütern von der unteren Förderstrecke an den zusammengeführten Förderbereich. Gemäss einem weiteren Ausführungsbeispiel ist das obere Antriebsmittel vor der Achse der Klappe angeordnet und ausgestaltet, Stückgüter des oberen Stückgutstroms auf die Klappe zu fördern. Dies ermöglicht es, den Klappmechanismus als einfach konstruierbaren passiven Mechanismus auszugestalten.

Gemäss einem Ausführungsbeispiel ist der Klappmechanismus ausgestaltet, auf der oberen Seite der Klappe aufliegende Stückgüter zumindest dann, wenn der Klappmechanismus sich in der Grundposition befindet, schwerkraftgetrieben (in Hauptförderrichtung) dem zusammengeführten Förderbereich zuzuführen. Alternativ oder zusätzlich ist der Klappmechanismus ausgestaltet, auf der oberen Seite der Klappe aufliegende Stückgüter zumindest dann, wenn der Klappmechanismus sich in der Grundposition befindet, staudruckgetrieben (in Hauptförderrichtung) dem zusammengeführten Förderbereich zuzuführen. Dies erlaubt es, dass die Klappe keine aktiven Antriebsmittel umfassen muss, um die Stückgüter au der Klappe zu fördern. Daher kann die Klappe ein geringes Gewicht aufweisen, wodurch sie durch auf der unteren Förderstrecke geförderte Stückgüter leichter angehoben werden kann.

Gemäss einem Ausführungsbeispiel ist die Klappe als Gleitelement ausgestaltet, auf welcher die Stückgüter Gleiten. Dies erlaubt eine besonders gewichtsarme Bauweise der Klappe. Dies erlaubt es auch, dass Stückgüter des oberen Stückgutstroms auf der oberen Seite der Klappe gleiten oder rutschen können. Auch erlaubt dies, dass Stückgüter des unteren Stückgutstroms die Klappe nach und nach anheben, indem sie an deren unteren Seite entlang und unter dieser hindurch gleiten.

Gemäss einem Ausführungsbeispiel weist die obere Seite der Klappe für ein vorgegebenes Stückgüterspektrum einen höheren Reibewert auf als die untere Seite der Klappe. Dies erlaubt es auf der unteren Förderstrecke geförderte Stückgüter in besonders einfacher Weise die Klappe anzuheben, um unter ihr durchzugleiten, während für auf der oberen Seite der Klappe geförderte Stückgüter verhindert werden kann, dass sie zu schnell gleiten.

Gemäss einem Ausführungsbeispiel umfasst der Klappmechanismus ein Gewichts-Kompensationssystem, welches bewirkt, dass die Klappe durch die Wirkung eines auf der unteren Förderstrecke in Hauptförderrichtung geförderten Stückgutes, das zu leicht wäre, um das Gewicht der Klappe ohne Gewichtskompensationssystem anzuheben, angehoben wird. Das Gewichtskompensationssystem kann beispielsweise ein Gegengewicht umfassen, das in einer Verlängerung, die sich an einer oder beiden Seiten der oberen Förderstrecke in einer Richtung stromaufwärts über die Achse hinaus erstreckt, wobei an der Verlängerung das Gegengewicht angebracht ist. Vorzugsweise erstreckt sich die Verlängerung nur seitlich der Klappe, sodass der obere Stückgutstrom 5 durch die Verlängerung nicht behindert wird. Gemäss einem Ausführungsbeispiel kann eine auch ein Federsystem mit geeigneter Vorspannung verwendet werden, um eine Gewichtskraftkompensation zu bewirken.

Gemäss einem weiteren Ausführungsbeispiel umfasst der Klappmechanismus ein Dämpfungselement, das ausgestaltet ist, zu hohe Rotationsgeschwindigkeiten der Klappe zu unterbinden.

Gemäss einem Ausführungsbeispiel ist der Klappmechanismus ausgestaltet, dass in der Grundposition ein vorgegebener freier Spalt zwischen dem Klappmechanismus und der unteren Förderstrecke besteht, unter welchem ein ausreichend kleines Stückgut auf der unteren Förderstrecke hindurch förderbar ist, ohne dass die Klappe durch die Wirkung des ausreichend kleinen Stückgutes angehoben wird. Auf diese Weise können Stückgüter, die zu leicht sind, um die Klappe anzuheben trotzdem unter der Klappe hindurch dem zusammengeführten Förderberiech zugeführt werden.

Gemäss einem Ausführungsbeispiel umfasst der Klappmechanismus eine zusätzliche vorzugsweise kleinere und leichtere Klappe, die an dem der Achse gegenüberliegenden Ende der Klappe schwenkbar befestigt ist. Dabei ist der Klappmechanismus ausgestaltet, dass die zusätzliche Klappe durch die Wirkung eines oder mehrerer auf der unteren Förderstrecke in Hauptförderrichtung geförderter Stückgüter angehoben wird und das eine oder die mehreren auf der unteren Förderstrecke in Hauptförderrichtung geförderten Stückgüter unter der angehobenen zusätzlichen Klappe hindurch dem zusammengeführten Förderbereich zugeführt werden. Insbesondere kann diese zusätzliche Klappe auch durch kleine Stückgüter angehoben werden, die unter dem Spalt zwischen der (oberen) Klappe und der unteren Förderstrecke hindurch passen würden. Durch den Einsatz einer solchen zusätzlichen Klappe können auf der oberen Förderstrecke geförderte Stückgüter geschont werden.

Gemäss einem Ausführungsbeispiel umfasst die untere Förderstrecke mehrere Förderstreckensegmente, und das untere Antriebsmittel umfasst mehrere individuell ansteuerbare Segmentantriebe zum individuellen Antreiben der Förderstreckensegmente. Das Kontrollsystem (8) ist eingerichtet, die Segmentantriebe so anzusteuern, dass das Zuführen von Stückgütern (9) auf der unteren Förderstrecke koordiniert wird, um das Zuführen von Stückgütern von der oberen Förderstrecke (4) und der unteren Förderstrecke zu dem zusammengeführten Förderbereich (6) koordiniert vorzunehmen. Beispielsweise lassen sich so mehrere Stückgüter auf der unteren Förderstrecke vor der Förderstrecke mit geringen Abständen zueinander ansammeln, während von der oberen Förderstrecke Stückgüter über die Klappe dem zusammengeführten Förderbereich zugeführt werden. Zu einem späteren Zeitpunkt zu welchem keine Stückgüter des oberen Stückgutstroms dem zusammengeführten Förderbereich zugeführt werden, können die auf der unteren Förderstrecke gesammelten Stückgüter gemeinsam unter der Klappe hindurch durch Antreiben der unteren Förderstrecke dem zusammengeführten Bereich zugeführt werden. Dadurch kann einerseits ein erhöhter Durchsatz erzielt werden, andererseits ist durch die erhöhte Anzahl Stückgüter es sehr unwahrscheinlich, dass deren Masse nicht ausreicht, die Klappe hochzudrücken.

Gemäss einem Ausführungsbeispiel umfasst die untere Förderstrecke den zusammengeführten Förderbereich. Gemäss einem Ausführungsbeispiel umfasst die die Förderstrecke einen stromauf zuoberst liegenden Teilbereich des zusammengeführten Förderbereiches.

Gemäss einem Ausführungsbeispiel ist das obere Zuführsystem ein Sorter und/oder ist das untere Zuführsystem ein Sorter, und die Ausgänge des oberen Zuführsystems und/oder des unteren Zuführsystems repräsentieren Sortierziele.

Gemäss einem Ausführungsbeispiel ist das Kontrollsystem mit mindestens einem, vorzugsweise beiden der Zuführsysteme verbunden und eingerichtet zusätzlich eine Zuführung von Stückgütern von dem oder den Zuführsystemen zu dem Zusammenführungssystem zu regeln.

Gemäss einem Ausführungsbeispiel ist das Kontrollsystem mit mindestens einem, vorzugsweise beiden der Zuführsysteme verbunden und eingerichtet, Signale von dem mindestens einen der Zuführsysteme zu empfangen, und in diesen Signalen enthaltene Informationen zu verwenden, um das Zuführen von Stückgütern von der oberen Förderstrecke zu dem zusammengeführten Förderbereich und das Zuführen von Stückgütern von der unteren Förderstrecke an den zusammengeführten Förderbereich koordiniert vorzunehmen. Die Informationen können beispielsweise Informationen über einen Abwurf eines Stückgutes in das Zusammenführungssystem sein, beispielsweise ein Abwurfsignal, ein Zeitpunkt des Abwurfs, Informationen über ein abgeworfenes Stückgut, wie beispielsweise das Gewicht, das Volumen, oder eine oder mehrere Abmessungen des Stückguts.

Im Folgenden wird die Erfindung anhand der in den Figuren dargestellten Ausführungsbeispiele näher beschrieben und erläutert. Darin zeigen schematisch:
Figur 1 eine Seitenansicht eines Zusammenführungssystems gemäss einem Ausführungsbeispiel der Erfindung zu einem ersten Zeitpunkt;
Figur 2 eine Seitenansicht des in Figur 1 gezeigten Zusammenführungssystems zu einem zweiten Zeitpunkt;
Figur 3 eine Seitenansicht des in Figur 1 gezeigten Zusammenführungssystems zu einem dritten Zeitpunkt;
Figur 4 eine Seitenansicht eines Zusammenführungssystems gemäss einem weiteren Ausführungsbeispiel der Erfindung;
Figur 5 eine Seitenansicht eines Fördersystems gemäss einem Ausführungsbeispiel der Erfindung;
Figur 6 eine Seitenansicht eines Fördersystems gemäss einem weiteren Ausführungsbeispiel der Erfindung.

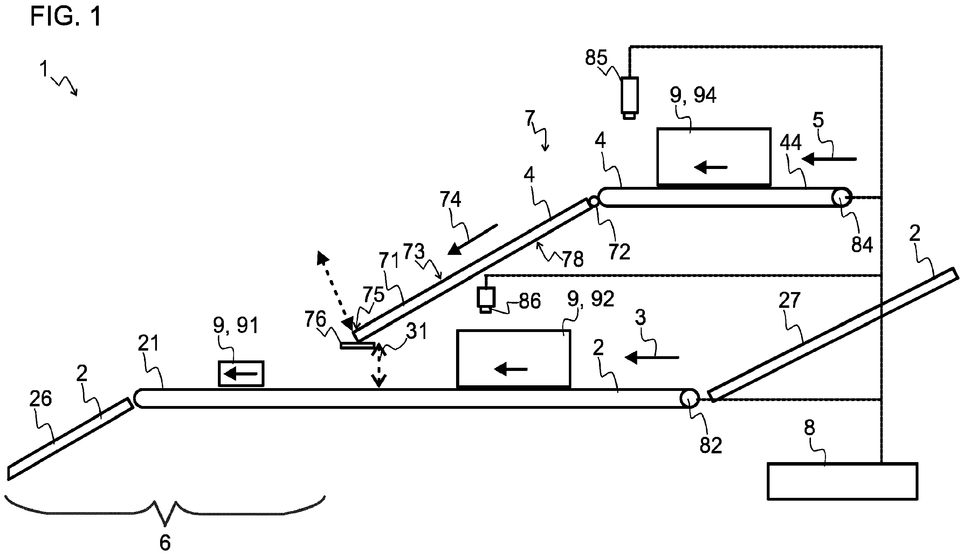

Die Figuren 1 bis 3 zeigen eine Seitenansicht eines Zusammenführungssystems 1 gemäss einem Ausführungsbeispiel der Erfindung zu drei aufeinanderfolgenden Zeitpunkten. Das Zusammenführungssystem lässt sich immer dann einsetzten, wenn zwei oder mehr Stückgutströme zusammengeführt werden sollen. Dies ist beispielsweise bei Speicherrutschensystem der Fall, die von zwei übereinander angeordneten Sortern mit Stückgütern befüllt werden, beispielsweise dann, wenn die zwei Sorter Ausgänge umfassen, die dasselbe Sortierziel repräsentieren. Gemäss dem Ausführungsbeispiel ist das Zusammenführungssystem 1 daher als Speicherrutschensystem 1 ausgestaltet. Das Speicherrutschensystem 1 ist eingerichtet, einen passiven vertikalen Merge durchzuführen. Das Speicherrutschensystem 1 umfasst eine untere Förderstrecke 2 zum Fördern eines unteren Stückgutstroms 3, eine vertikal über der unteren Förderstrecke 2 angeordnete obere Förderstrecke 4 zum Fördern eines oberen Stückgutstroms 5, einen zusammengeführten Förderbereich 6 in welchem die Stückgüterströme des unteren 3 und des oberen 5 Stückgutstroms zusammen gefördert werden, einen Klappmechanismus 7 mit einer Klappe 71 und ein Kontrollsystem 8.

Die untere Förderstrecke 2 umfasst mindestens ein aktiv angetriebenes Streckensegment, beispielsweise ein Förderband 21, sowie Rutschflächen 26, 27. Die obere Förderstrecke 4 umfasst ebenfalls ein oder mehrere aktiv angetriebene Streckensegmente, beispielsweise ein Förderband 44. Die Streckensegmente 21, 44 in diesem Ausführungsbeispiel können horizontal oder leicht geneigt und über Lichtschranken geregelt sein.

In diesem Ausführungsbeispiel verlaufen der obere Stückgutstrom 5 und der untere Stückgutstrom 3 im Bereich der Förderstrecken 21, 44 parallel und horizontal. Auch verlaufen die Förderströme 3, 5 zumindest in einem Überschneidungsbereich entlang ihrer Förderstrecken 2, 4 senkrecht übereinander angeordnet. In Varianten verlaufen die Förderstrecken 2, 4 schräg zueinander und/oder abfallend oder ansteigend. In weiteren Varianten verlaufen die Förderstrecken 2, 4 im Wesentlichen parallel oder die horizontalen Bewegungskomponenten der beiden Stückgüterströme 3, 5 laufen im Wesentlichen parallel. Auch sind Lösungen möglich, in denen beispielsweise der obere Förderstrom 5 seitlich in den unteren Förderstrom 3 mündet. Gemäss einem Ausführungsbeispiel kann der obere Förderstrom 5 und der untere Förderstrom 3 in einem karthesischen Koordinatensystem 71 zumindest eine parallele Bewegungskomponente, vorzugsweise zwei parallele Bewegungskomponenten aufweisen, insbesondere im Bereich der Klappe 71, respektive dem Klappenende 75.

Im vorliegenden Ausführungsbeispiel verlaufen die beiden (zuführenden) Transportvorrichtungen 21, 44 parallel. In andern Ausführungsbeispielen sind die Transportvorrichtungen 21, 44 jedoch nicht parallel, sondern liegen unter einem Winkel zueinander, sind also schief zueinander angeordnet.

Im vorliegenden Ausführungsbeispiel verlaufen die beiden (zuführenden) Transportvorrichtungen 21, 44 horizontal. In andern Ausführungsbeispielen verlaufen die Transportvorrichtungen 21, 44 jedoch nicht horizontal, sondern weisen eine Steigung oder ein Gefälle auf. Auch können die Gefälle der beiden Transportvorrichtungen 21, 44 in Förderrichtung und/oder transversal dazu gleich oder unterschiedlich sein.

Die Achse 72 muss nicht wie im Ausführungsbeispiel der Figuren 1-3 realisiert unmittelbar an die Transportvorrichtung 44 anschliessen, sondern kann unter der Transportvorrichtung 44 positioniert sein, wodurch der Winkel der als Rutsche ausgestalteten Klappe zur Ebene flacher wird und die Klappe länger wird. Dies hat den Vorteil, dass beim Rutschen keine zu große kinetische Energie entsteht, welche die Sendungen beim Auftreffen auf andere Sendungen beschädigt.

Der Klappmechanismus 7 umfasst die Klappe 71, die um eine in der oberen Förderstrecke 4 angeordnete horizontale Schwenkachse 72 schwenkbar ist, sodass eine obere Seite 73 oder Oberfläche 73 der Klappe 71 sich an die obere Förderstrecke 4 anschliesst und Teil einer Förderfläche der oberen Förderstrecke 4 ist, mit einer Hauptförderrichtung 74, die von der Achse 75 zu dem der Achse gegenüber liegenden Ende 75 der Klappe 71 verläuft. Die Klappe 71 in diesem Ausführungsbeispiel umfasst eine obere Rutschfläche 73 die vorgesehen ist, dass Stückgüter auf der oberen Rutschfläche 73 gleiten. Die Klappe 71 in diesem Ausführungsbeispiel umfasst auch eine untere Rutschfläche, die vorgesehen ist, dass Stückgüter unter der unteren Rutschfläche hindurch gleiten. Die Klappe 71 kann zudem in longitudinale Segmente unterteilt sein, die unabhängig von einander um die Achse 72 schwenkbar sind.

Im vorliegenden Ausführungsbeispiel sind die horizontalen vektoriellen Komponenten der Bewegungsrichtung des unteren Stückgutstroms und des oberen Stückgutstroms (also die Projektionen der Geschwindigkeitsvektoren auf eine virtuelle horizontal liegende Ebene eines kartesischen Koordinatensystems) im Bereich der Klappe in die gleiche Richtung verlaufend.

Das Speicherrutschensystem 1 ist ausgestaltet, auf der oberen Förderstrecke 4 geförderte Stückgüter 9 in einer Hauptförderrichtung, die im Folgenden auch obere Hauptförderrichtung genannt wird, via die Klappe 71 dem zusammengeführten Förderbereich 6 zuzuführen. Das Speicherrutschensystem 1 ist zudem ausgestaltet, auf der unteren Förderstrecke 2 geförderte Stückgüter 9 in einer Hauptförderrichtung, die im Folgenden auch untere Hauptförderrichtung genannt wird, unter der Klappe 71 hindurch dem zusammengeführten Förderbereich 6 zuzuführen.

Der Klappmechanismus 7 umfasst eine Grundposition, die sich dann einstellt, wenn keine Stückgüter auf der unteren Förderstrecke 2 die Klappe 71 anheben. Zumindest in der Grundposition ist die Klappe 71 von der Achse 72 zu dem der Achse gegenüberliegenden Ende 75 hin auf die untere Förderstrecke 2 zulaufend angeordnet ist. Die Grundposition wird durch einen Anschlag 76 realisiert, auf welchem das der Achse 72 gegenüberliegende Klappenende 75 in der Grundposition aufliegt und der daher den Weg der Klappe 71 nach unten begrenzt. Der Anschlag 76 ist so ausgestaltet und angeordnet, dass er die Stückgutströme 3, 5 nicht behindert, beispielsweise indem der Anschlag 32 zwei kleine in vertikaler Projektion in einem Seitenbereich der Förderstrecken 2, 4, angeordnete Strukturen umfasst, auf denen das Klappenende 75 mit seinen seitlichen Bereichen aufliegt, während der gesamte zwischen diesen seitlichen Bereichen liegende Teil des Klappenendes 75 auf einer Höhe 31 über der unteren Förderstrecke 2 schwebt.

Der Klappmechanismus 7 ist ausgestaltet, dass in der Grundposition ein vorgegebener freier Spalt 31 zwischen dem Klappmechanismus 7 und der unteren Förderstrecke 2 besteht, unter welchem ein ausreichend kleines Stückgut 91 auf der unteren Förderstrecke 2 hindurch förderbar ist, ohne dass die Klappe 71 durch die Wirkung des ausreichend kleinen Stückgutes 91 angehoben wird.

In andern Ausführungsformen kann die Klappe 71 auch so ausgestaltet und angeordnet sein, dass kein Spalt 31 zwischen dem Klappenende 75 und der unteren Förderstrecke 2 vorhanden ist, der ausreichend gross wäre, dass alle Stückgüter 9, also auch die kleinsten Stückgüter eines gegebenen Stückgüterspektrums für welches das Speicherrutschensystem ausgelegt ist, hindurch passen. In diesem Fall müssen alle Stückgüter eine solche Klappe anheben, um von dem unteren Stückgutstrom 3 in den zusammengeführten Förderbereich zu gelangen.

In Hauptförderrichtung auf der oberen Förderstrecke 4 auf der oberen Seite der Klappe 71 geförderte Stückgüter 94 werden via das der Achse gegenüberliegende Ende 75 der Klappe 71 dem zusammengeführten Förderbereich 6 zugeführt. Auf der oberen Seite der Klappe 71 geförderte Stückgüter werden mittels Schwerkraft der Stückgüter gefördert, indem die Stückgüter auf der Oberfläche 73 der Klappe 71 gleiten. Zusätzlich oder alternativ können die Stückgüter auf der Klappe 71 auch durch einen Staudruck von auf dem oberen Förderband 44 geförderten Stückgütern 9 gefördert werden. Die Klappe 71 kann beispielsweise als Blech, alternativ auch als Rollenbahn ausgestaltet sein. Ein Blech hat den Vorteil, dass es sich einfacher und gewichtsärmer herstellen und montieren lässt, was es auf der unteren Förderstrecke 2 geförderten Stückgütern 9 erleichtert, die Klappe 71 anzuheben.

Gemäss dem Ausführungsbeispiel ist der Klappmechanismus passiv, umfasst also keine Aktoren zum aktiven Heben oder Senken der Klappe 71.

Der Klappmechanismus 7 und die untere Förderstrecke 2 sind ausgestaltet und relativ zueinander so angeordnet, dass die Klappe 71 durch die Wirkung eines oder mehrerer auf dem unteren Förderband 21 in der unteren Hauptförderrichtung geförderter Stückgüter 92 angehoben wird und das eine oder die mehreren auf der unteren Förderstrecke 21 in Hauptförderrichtung geförderten Stückgüter 92 unter der Klappe 71 hindurch dem zusammengeführten Förderbereich 6 zugeführt werden.

Das Speicherrutschensystem 1 umfasst zudem ein Kontrollsystem 8 und die untere Förderstrecke 2 umfasst ein unteres Antriebsmittel, das im Folgenden einfach auch unterer Antrieb genannt wird, beispielsweise einen Elektromotor oder sonstigen Aktor zum Antreiben des unteren Förderbandes 21, respektive der unteren Förderstrecke 2. Das Kontrollsystem 8 ist eingerichtet, den unteren Antrieb 82 so anzusteuern, dass das Zuführen von Stückgütern 9 von der oberen Förderstrecke 4 zu dem zusammengeführten Förderbereich 6 und das Zuführen von Stückgütern 9 von der unteren Förderstrecke 2 an den zusammengeführten Förderbereich 6 koordiniert vorgenommen wird. Hierzu umfasst das Kontrollsystem 8 vorzugsweise Sensoren 85, 86 zum Detektieren der Anwesenheit von Stückgütern auf der oberen und/oder unteren Förderstrecke 2. Die gestrichelten Linien in den Figuren zeigen Datenverbindungen, welche die Sensoren in das Kontrollsystem 8 einbinden. Die Sensoren können Lichtschranken, Lichtgitter oder Kameras umfassen. Alternativ oder zusätzlich kann die Position von Stückgütern auch ermittelt werden, indem diese getrackt werden. Um die Stückgüter zu tracken kann berechnet werden, um welche Strecken sie auf der Speicherrutsche und vorgelagerten Systemen, beispielsweise auf vertikal übereinander angeordneten Sortern, gefördert werden.

Die in den Figuren 1-3 gezeigte Förderstrecke 4 umfasst zudem einen ansteuerbaren oberen Antrieb 84 zum Antreiben des oberen Förderbandes 44. Dies erlaubt es, auch auf der oberen Förderstrecke 4 aufliegende Stückgüter 9 wahlweise zu der Klappe 71 zuzuführen oder die obere Förderstrecke 4 anzuhalten. Dies erlaub eine erhöhte Flexibilität in der koordinierten Zuführung von Stückgütern 94 von der oberen Förderstrecke 4 an den zusammengeführten Förderbereich 6 und von Stückgütern 92 von der unteren Förderstrecke 2 an den zusammengeführten Förderbereich 6.

Im Folgenden wird ein Verfahren zum Zusammenführen von zwei Stückgutströmen 3, 5 gemäss einem Ausführungsbeispiel anhand der Figuren 1-3 beschrieben. In Figur 1 ist ersichtlich, wie sich auf der oberen Förderstrecke 4 mindestens ein Stückgut 94 befindet, während sich auf der unteren Förderstrecke 2 ebenfalls mindestens ein Stückgut 91, 92 befindet. Figur 1 zeigt einen Zustand, in welchem das Stückgut 91 durch das Förderband 21 bereits in den zusammengeführten Bereich 6 gefördert wurde. Das Stückgut 91 ist dabei ausreichend klein, dass es unter dem Spalt 31 hindurch passt und daher nicht angehoben werden musste. In Figur 1 werden die Stückgüter des oberen Stückgutstroms 3 sowie die Stückgüter des unteren Stückgutstroms 5 in der jeweiligen Hauptförderrichtung 3, 5 gefördert, bis auf dem oberen Stückgutstrom 5 und auf dem unteren Stückgutstrom 3 durch die Sensoren 85, 86, jeweils die Anwesenheit mindestens eines Stückgutes 92, 94 detektiert wird, die sich auf einem Kollisionskurs befinden. Ein Kollisionskurs kann dabei beispielsweise bedeuten, dass das Stückgut 94 des oberen Stückgutstroms 5 bei der Übergabe an den zusammengeführten Förderbereich auf das Stückgut 92 zu liegen käme, oder dass während das Stückgut 94 auf der Klappe 71 rutschen würde, während die Klappe 71 durch das auf der unteren Förderstrecke 2 geförderte Stückgut 92 angehoben würde. Dass sich zwei oder mehr Stückgüter auf Kollisionskurs befinden, wird dabei von dem Kontrollsystem 8 anhand der von den Sensoren 85, 86 ermittelten zeitlichen Anwesenheiten von Stückgütern 92, 94 ermittelt.

Das Kontrollsystem 8 ist eingerichtet, den Antrieb 82 der unteren Förderstrecke 21 aufgrund des detektierten Kollisionskurses anzuhalten.

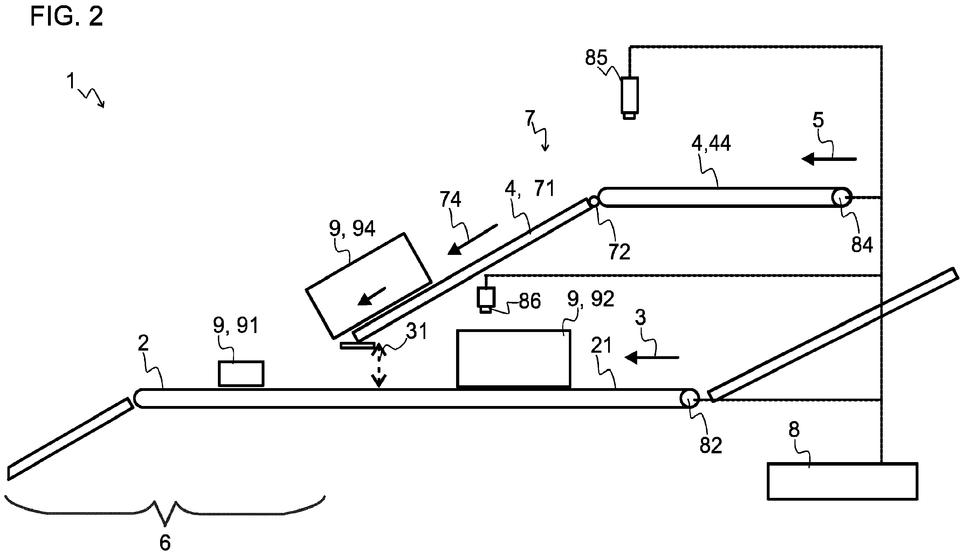

Figur 2 zeigt das Speicherrutschensystem 1 zu einem späteren Zeitpunkt als Figur 1, während welchem das untere Förderband 21 angehalten ist, während auf der oberen Förderstrecke 4 der Stückgutstrom 5 kontinuierlich gefördert wird, bis das Stückgut 92 via die Klappe 71 in die Lücke zwischen den zwei sich auf unterschiedlichen Seiten der Klappe 71 befindlichen Stückgütern 91, 92 des noch stehenden ersten Stückgutstroms 5 eingefügt wird. Das Kontrollsystem 8 ist dabei eingerichtet, die den Antrieb 82 früh genug anzuhalten, damit die Klappe 71 nicht durch das Stückgut 92 schon angehoben würde.

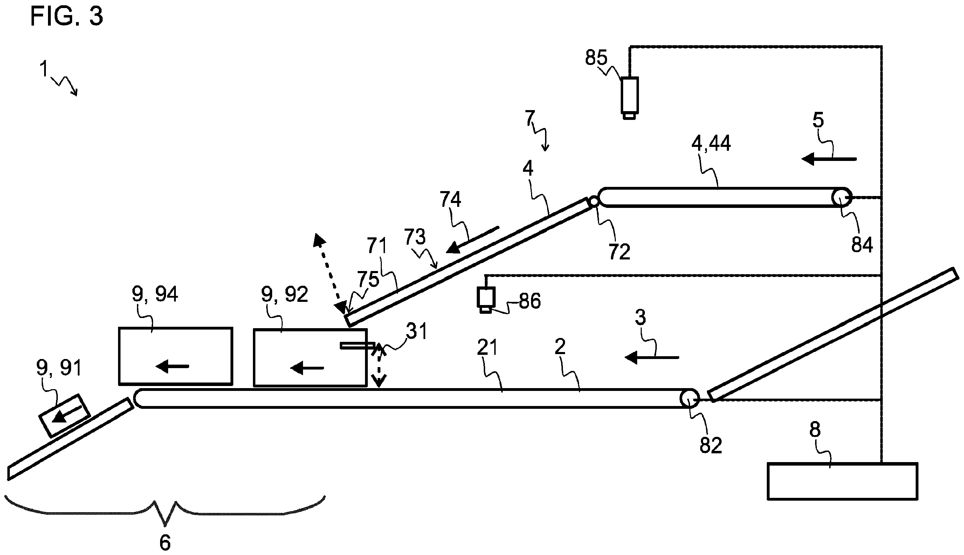

Figur 3 zeigt das Speicherrutschensystem 1 zu einem späteren Zeitpunkt als Figur 2, während welchem der Antrieb 82 durch das Kontrollsystem 8 wieder in Gang gesetzt wurde, sodass die Stückgüter 91, 94, 92 in dem zusammengeführten Bereich 6 wiederum kontinuierlich als zusammengeführter Stückgutstrom gefördert werden. Dabei ist das Kontrollsystem 8 so programmiert, dass es die untere Förderstrecke 2 wieder in Gang setzt, wenn der Einfügevorgang des Stückgutes 94 zwischen die Stückgüter 91, 92 abgeschlossen ist.

Optional kann das Kontrollsystem 8 auch eingerichtet sein, den Antrieb 84 der oberen Förderstrecke 4 anzusteuern, um die beiden Stückgutströme 3, 5 noch besser zu koordinieren. Beispielsweise kann dabei die obere Förderstrecke 4 angehalten werden, um sicherzustellen, dass auf der unteren Förderstrecke 2 eine ausreichend grosse Lücke vorhanden ist, um das Stückgut 94 einzufügen.

Zahlreiche andere Möglichkeiten zur Koordination der Stückgutströme 3, 5 können dabei durch das Kontrollsystem 8 vorgenommen werden. Beispielsweise kann das Kontrollsystem 8 die obere Förderstrecke 4 und/oder die untere Förderstrecke 2 so ansteuern, dass Stückgüter des oberen Stückgutstromes 5 auf Stückgüter des unteren Stückgutstromes 3 gestapelt werden, beispielsweise um den Platz in die Höhe möglichst optimal auszunutzen. Beispielsweise können die Stückgutströme 3, 5 auch so koordiniert werden, dass nur leichte Stückgüter des oberen Stückgutsstroms 5 auf ein Stückgut des unteren Stückgutstroms gestapelt werden. Auf diese Weise kann die Höhe optimal ausgenutzt werden, während das Risiko von Schäden an Stückgütern minimiert wird.

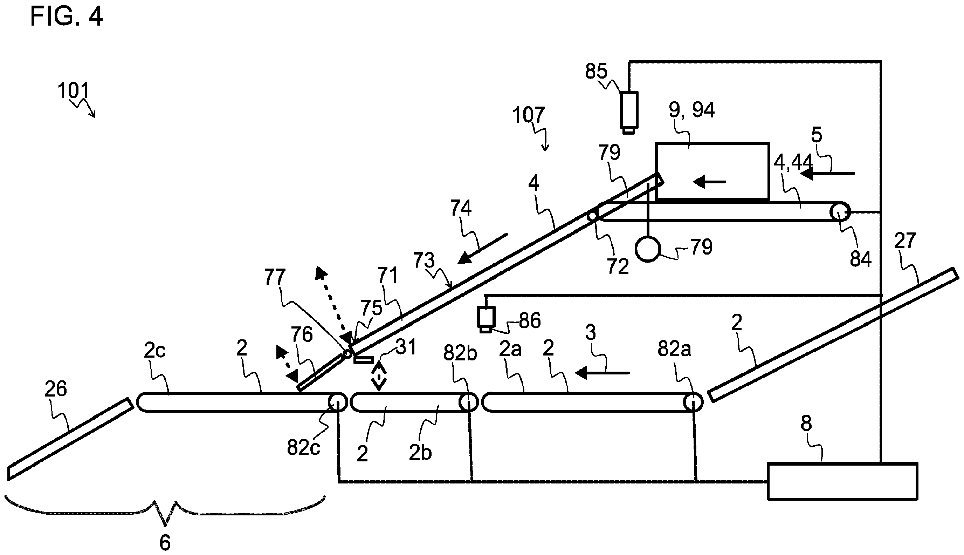

In Figur 4 ist eine zu den Figuren 1-3 alternative Ausgestaltung eines Speicherrutschensystems 101, respektive eines Zusammenführungssystem 101 dargestellt. Die nachfolgende Beschreibung beschränkt sich im Wesentlichen auf die Unterschiede zu dem Ausführungsbeispiel in den Figuren 1-3, wobei bezüglich gleich bleibender Bauteile, Merkmale und Funktionen auf die Beschreibung des Ausführungsbeispiels in den Figuren 1-3 verwiesen wird. Im Wesentlichen gleichbleibende Bauteile, Merkmale und Funktionen sind grundsätzlich mit den gleichen Bezugszeichen beziffert.

Die untere Förderstrecke umfasst dabei mehrere separat antreibbare Förderstreckensegmente 2a, 2b, 2c und ein Antriebsmittel, das mehrere Antriebe 82a, 82b, 82c umfasst. Die Antriebe 82a, 82b, 82c sind jeweils individuell durch das Kontrollsystem 8 ansteuerbar ausgestaltet, jeweils eines der Förderstreckensegmente 2a, 2b, 2c anzutreiben. Das Kontrollsystem 8 ist eingerichtet, die Segmentantriebe 82a, 82b, 82c so anzusteuern, dass das Zuführen von Stückgütern 9 auf der unteren Förderstrecke koordiniert wird, um das Zuführen von Stückgütern von der oberen Förderstrecke 4 und der unteren Förderstrecke 2 zu dem zusammengeführten Förderbereich 6 koordiniert vorzunehmen.

Das Speicherrutschensystem 101 umfasst zudem einen modifizierten Klappmechanismus 107 mit einer zusätzlichen, vorzugsweise kleineren Klappe 76 als die Klappe 71, die an dem der Achse 72 gegenüber liegenden Ende 75 der Klappe 71 schwenkbar um eine weitere Achse 77 befestigt ist. Der Klappmechanismus 107 ist ausgestaltet, dass die zusätzliche Klappe 76 durch die Wirkung eines oder mehrerer auf der unteren Förderstrecke 2 in Hauptförderrichtung geförderter Stückgüter 91, 92 angehoben wird und das eine oder die mehreren auf der unteren Förderstrecke 2 in Hauptförderrichtung 3 geförderten Stückgüter 91, 92 unter der angehobenen zusätzlichen Klappe 76 hindurch dem zusammengeführten Förderbereich 6 zugeführt werden. Insbesondere wird diese zusätzliche Klappe 76 auch durch kleine Stückgüter angehoben, die unter dem Spalt 31 hindurch passen würden. Auf diese Weise lässt sich sicherstellen, dass auch kleine Stückgüter auf der unteren Förderstrecke die Klappe anzuheben vermögen, während auf der oberen Förderstrecke 4 geförderte Stückgüter schonend über die Klappen 71, 76 in den zusammengeführten Förderbereich 6 gefördert werden.

Somit kann eine zusätzliche kleine Klappe 76 in Verlängerung der drehbaren Klappe 71 an dieser ergänzt werden, damit von flachen Sendungen nur die kleine Klappe 76 angehoben werden muss und die von oben kommenden Sendungen trotzdem einen sanften Übergang auf die Transportvorrichtung erfahren.

Gemäss einem Ausführungsbeispiel umfasst der Klappmechanismus ein Gewichts-Kompensationssystem, welches bewirkt, dass die Klappe 71 durch die Wirkung eines auf der unteren Förderstrecke in Hauptförderrichtung geförderten Stückgutes, das zu leicht wäre, um das Gewicht der Klappe ohne Gewichtskompensationssystem anzuheben, angehoben wird. Das Gewichtskompensationssystem kann beispielsweise ein Gegengewicht 79 umfassen, das in einer Verlängerung 78, die sich an einer oder beiden Seiten der oberen Förderstrecke 4 in einer Richtung stromaufwärts über die Achse 72 hinaus erstreckt, wobei an der Verlängerung das Gegengewicht 79 angebracht ist. Vorzugsweise erstreckt sich die Verlängerung nur seitlich der Klappe 71, sodass der obere Stückgutstrom 5 durch die Verlängerung 78 nicht behindert wird. Gemäss einem Ausführungsbeispiel kann eine auch ein Federsystem mit geeigneter Vorspannung verwendet werden, um eine Gewichtskraftkompensation zu bewirken. Vorzugsweise umfasst auch die zusätzliche Klappe 76 Gewichtskompensationssystem.

Gemäss einem weiteren Ausführungsbeispiel umfasst der Klappmechanismus ein Dämpfungselement, das ausgestaltet ist, zu hohe Rotationsgeschwindigkeiten der Klappe zu unterbinden.

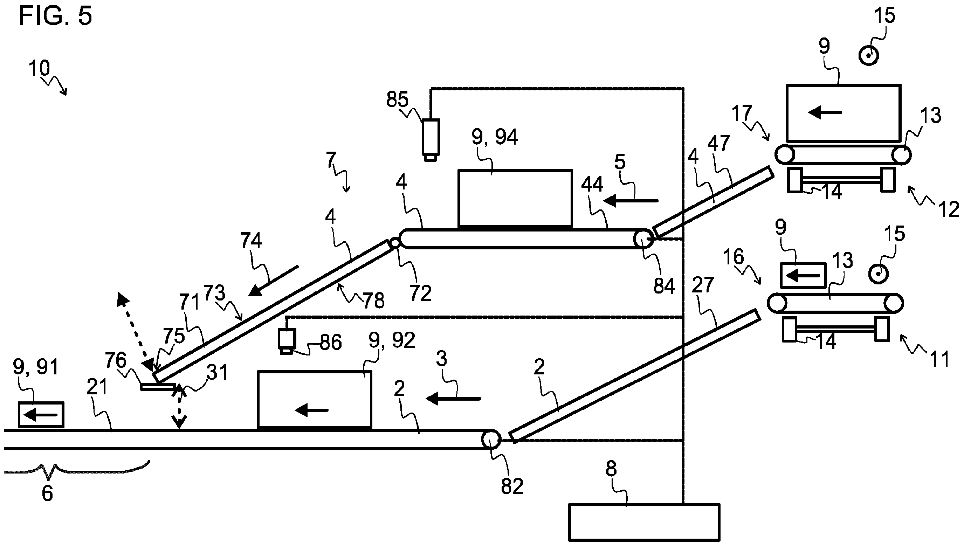

Figur 5 zeigt schematisch eine Seitenansicht eines Teils eines Fördersystems 10 gemäss einem Ausführungsbeispiel der Erfindung.

Das Fördersystem 10 umfasst mindestens zwei übereinander angeordnete Sorter 11, 12, die in dem vorliegenden Ausführungsbeispiel als Querbandsorter ausgestaltet sind. Die Sorter 11, 12 umfassen jeweils mehrere Fahrwerke 14 auf denen jeweils mindestens ein Quergurtförderer 13 montiert ist. Anstelle von Quergurtsortern könnten auch Kippschalensorter, Schuhsorter oder andere Sorter verwendet werden.

Die Fahrwerke 14 sind in einer Fahrtrichtung 15 antreibbar, während die Quergurtförder 13 ausgestaltet sind Stückgüter 9 aufzunehmen und seitlich oder orthogonal zu der Fahrtrichtung 15 abzuwerfen.

Die Sortersysteme 11, 12 sind als in bekannter Weise als entlang einer vorgegebenen Spur fahrende Zugsysteme mit hintereinander angeordneten Wagen ausgestaltet. Alternativ können die Sortersysteme 11, 12 auch ein oder mehrere Automated Guided Vehicles (AGV) umfassen, die sich auf einer Fahrebene frei bewegen können.

Das Fördersystem 10 umfasst zudem ein gemäss den Figuren 1-3 beschriebenes Speicherruschensystem 1. Anstelle des Speicherrutschensystems 1 könnte das Fördersystem 10 auch ein gemäss Figur 4 beschriebenes Speicherruschensystem 101 oder ein anderes Speicherrutschenssystem gemäss einem Ausführungsbeispiel der Erfindung umfassen. Der obere Sorter 12 und der untere Sorter 11 umfassen jeweils mehrere entlang ihrer Fahrspuren seitlich angeordnete Sorterausgänge die Sortierziele repräsentieren. Die Sorterausgänge des oberen 12 und des unteren 11 Sorters sind vertikal übereinander angeordnet, sodass zumindest ein Teil der Sorterausgänge jeweils ein vertikal in Fallrichtung übereinander angeordnetes Sorterausgangspaar bilden. Ein solches Sorterausgangspaar wird auch durch die in Figur 5 ersichtlichen Sorterausgänge 16, 17 gebildet.

Diesem Sorterausgangspaar entspricht ein Eingangspaar des Speicherrutschensystems mit zwei in Fallrichtung vertikal übereinander angeordneten als Rutschflächen ausgestalteten Eingängen 27, 47 des Speicherrutschensystems 1. Der Sorterausgang 17 des oberen Sorters 11 ist ausgestaltet, dem stromaufwärts der Klappe angeordneten Eingang 44 der oberen Förderstrecke 4 Stückgüter 9 zuzuführen. Der Sorterausgang 16 des unteren Sorters 11 ist ausgestaltet, einem stromaufwärts der Klappe angeordneten Eingang 27 der unteren Förderstrecke 2 Stückgüter 9 zuzuführen.

Auf diese Weise kann der obere Sorter 12 einen Stückgutstrom 5 und der untere Sorter 11 einen Stückgutstrom 3 erzeugen, wobei die beiden Stückgutströme 3, 5 in dem Speicherrutschensystem 1 schonend und effizient zusammengeführt werden. Im Gegensatz zu einer waagrecht parallelen Zusammenführung von Stückgütern lässt sich so der Flächenbedarf reduzieren, respektive lassen sich auf einer gegebenen Fläche des Speicherrutschensystems breitere Förderstrecken 2, 4 realisieren, was das Risiko eines Staus durch Verklemmungen reduziert.

Gemäss einem Ausführungsbeispiel ist das Kontrollsystem 8 mit mindestens einem, vorzugsweise beiden der Sorter 11, 12 verbunden und eingerichtet zusätzlich eine Zuführung von Stückgütern von dem oder den Sortern 11, 12 zu dem Speicherrutschensystem 1 zu regeln. Ist beispielsweise absehbar, dass eine während einer bestimmten Zeitspanne eine Ausschleusung von Stückgütern vom oberen Sorter 12 in den Eingang 47 der oberen Förderstrecke 4 das Kontrollsystem 8 veranlassen würde das Fördern von Stückgütern auf der unteren Förderstrecke 2 zu unterbrechen um im Rahmen der Koordination eine Kollision von Stückgütern 9 bei der Rutsche zu verhindern, so kann die Kontrolleinrichtung den oberen Sorter 12 während dieser Zeitspanne so ansteuern, dass dieser keine, weniger oder nur bestimmte Stückgüter in den Eingang 47 ausschleust. Umgekehrt kann die Kontrolleinrichtung auch eingerichtet sein, eine Zuführung von Stückgütern vom unteren Sorter 11 in den Eingang 27 zu drosseln oder zu unterbrechen, wenn Bedarf besteht.

Figur 5 zeigt somit ein als Sortiereinrichtung 10 ausgestaltetes Fördersystem. Die Sortiereinrichtung 10 umfasst mindestens ein Speicherruschensystem 1 gemäss einem der Ansprüche 1-12 und/oder gemäss einem der in der Beschreibung und/oder in den Figuren dargestellten Ausführungsbeispiele, sowie einen oberen Sorter 12 und einen unteren Sorter 11;
wobei der obere Sorter 12 und der untere Sorter 11 jeweils mehrere Sorterausgänge 16, 17 umfassen, die Sortierziele repräsentieren;
wobei ein Sorterausgang 17 des oberen Sorters 12 ausgestaltet ist, einem stromaufwärts der Klappe 71 angeordneten Eingang 47 der oberen Förderstrecke 4 Stückgüter 9 zuzuführen und ein Sorterausgang 16 des unteren Sorters 11 ausgestaltet ist, einem stromaufwärts der Klappe 71 angeordneten Eingang 27 der unteren Förderstrecke 2 Stückgüter 9 zuzuführen.

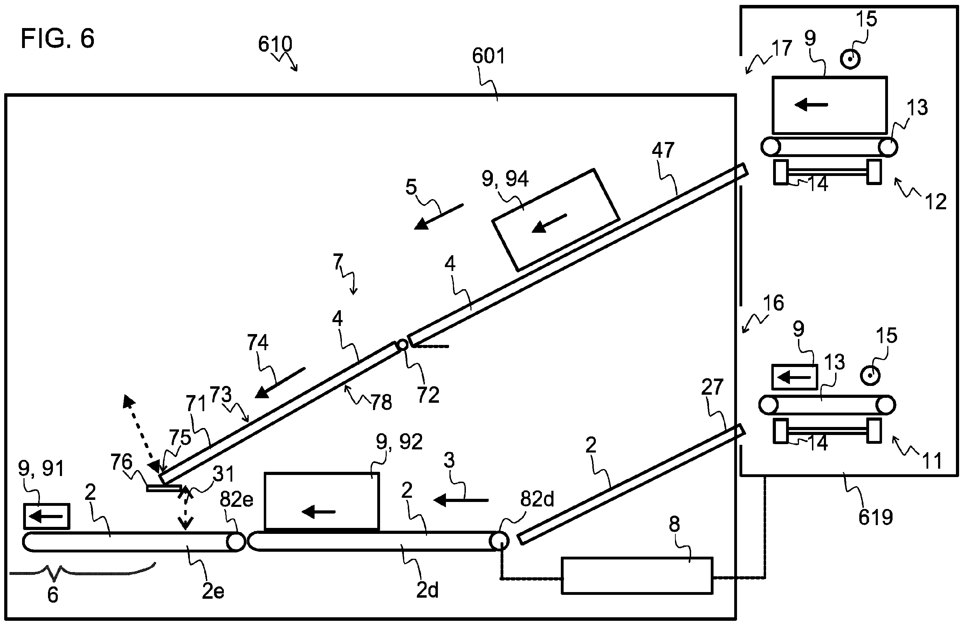

Figur 6 zeigt schematisch eine Seitenansicht eines Teils eines Fördersystems 610 gemäss einem weiteren Ausführungsbeispiel der Erfindung.

Die nachfolgende Beschreibung beschränkt sich im Wesentlichen auf die Unterschiede zu dem Ausführungsbeispiel in Figur 5, wobei bezüglich gleich bleibender Bauteile, Merkmale und Funktionen auf die Beschreibung des Ausführungsbeispiels in den Figur 5 verwiesen wird. Im Wesentlichen gleichbleibende Bauteile, Merkmale und Funktionen sind grundsätzlich mit den gleichen Bezugszeichen beziffert.

Das als Sortiereinrichtung ausgestaltete Fördersystem 610 umfasst ein Speicherrutschensystem 601 und ein Sortersystem 619 mit den zwei übereinander angeordneten Sortern 11, 12.

In dem Speicherrutschensystem 619 umfasst die oberere Förderstrecke 4 keine aktiv angetriebenen Förderstreckensegmente, sondern umfasst oder besteht lediglich aus Schwerkraftförderern 47, beispielsweise Rutschen oder passiven Rollenbahnen, sowie der ebenfalls auf Schwerkraftförderung beruhenden oberen Seite der Rutsche 71.

Die untere Förderstrecke 2 umfasst die beiden als Förderbänder ausgestalteten Förderstrecken 2d, 2e, wobei die Förderstrecke 2d stromaufwärts von dem zusammengeführten Bereich angeordnet und durch das Kontrollsystem 8 kontrollierbar ist.

Das Sortersystem 619 ist mit dem Kontrollsystem 8 kommunikativ (beispielsweise elektronisch) verbunden und eingerichtet, Signale von beiden Sortern 11, 12 zu empfangen, und in diesen Signalen enthaltene Informationen zu verwenden, um das Zuführen von Stückgütern von der oberen Förderstrecke zu dem zusammengeführten Förderbereich 6 und das Zuführen von Stückgütern von der unteren Förderstrecke 2 an den zusammengeführten Förderbereich koordiniert vorzunehmen. Die Informationen können beispielsweise Informationen über einen Abwurf eines Stückgutes in das Speicherrutschensystem 601 sein, beispielsweise ein Abwurfsignal, ein Zeitpunkt des Abwurfs, Informationen über ein abgeworfenes Stückgut, wie beispielsweise das Gewicht, das Volumen, eine oder mehrere Abmessungen des Stückguts, von welchem Sorter 11, 12 das Stückgut abgeworfen wurde oder in welchen der Ausgänge das Stückgut abgeworfen wurde. Diese Informationen erlauben es dem Kontrollsystem 8, das untere Antriebsmittel 82 so anzusteuern, dass das Zuführen von Stückgütern 9 von der oberen Förderstrecke 4 zu dem zusammengeführten Förderbereich 6 und das Zuführen von Stückgütern 9 von der unteren Förderstrecke 2 an den zusammengeführten Förderbereich 6 koordiniert vorgenommen wird.

Dabei können beispielsweise die Informationen die bei einem Abwurf von dem unteren Sorter 11 in den Ausgang 16, also an die untere Förderstrecke 2 und die Informationen die bei einem Abwurf von dem oberen Sorter 12 in den Ausgang 17, also an die obere Förderstrecke 4 an das Kontrollsystem 8 übermittelt werden wie folgt verwendet werden, um den Antrieb 82d anzusteuern:
Solange vom oberen Förderer keine Stückgüter an die obere Förderstrecke abgegeben werden, also solange die obere Förderstrecke 2 frei ist, können alle an die untere Förderstrecke 2 abgegebenen Stückgüter unter der Klappe 71 hindurch dem zumsammengeführten Bereich 6 gefördert werden.

Werden auf der oberen Förderstrecke 4 Stückgüter gefördert, ist also die obere Förderstrecke 4 nicht frei, können auf dem Förderband 2d Stückgüter, die vom unteren Sorter 11 in den Ausgang 16 abgegeben werden, gesammelt werden. Dabei können beispielsweise die Informationen, die bei einem Abwurf von dem unteren Sorter 11 in den Ausgang 16 verwendet werden, um Stückgüter 9 auf dem Förderer 2d zu sammeln, für jedes Stückgut, das der Förderer 2d von Sorter 11 entgegennimmt, das Kontrollsystem 8 den Antrieb 82 in Gang setzt, um das Förderband 2d eine dem aufgenommenen Stückgut entsprechende Strecke vorzufahren.

Sobald die obere Förderstrecke 4, respektive die Klappe 71 wieder frei ist, können die auf der unteren Förderstrecke auf dem Förderband 82d gesammelten Stückgüter unter der Klappe 71 hindurch dem zumsammengeführten Bereich 6 gefördert werden, indem das Kontrollsystem 8 den Antrieb 82d in Gang setzt. Die Förderstrecke 2e kann dabei permanent angetreiben werden und muss nicht mit dem Kontrollsystem verbunden sein. In einer Variante ist der Antrieb 82e jedoch mit dem Kontrollsystem 8 verbunden und durch dieses kontrollierbar, wodurch sich die Koodination flexibler umsetzten lässt, beispielsweise wenn auf dem Förderband 2e Stückgüter möglichst dicht gepackt werden müssen.

Zusätzlich kann die Zusammenführeinrichtung 601 auch ein Sensorsystem mit Sensoren 85, 86 umfassen, dass an geeigneten Stellen Stückgüter detektiert und an das Kontrollsystem 8 übermittelt, um die Informationen über die Stückgüter zu erhalten, mittels derer die Zusammenführung des oberen 5 und des unteren Stückgutstroms 3 koordiniert wird.

In einer weiteren Variante kann anstelle des Förderbandes 2e auch ein passives Element, beispielsweise eine Rutsche verwendet werden, um die Stückgüter zu sammeln.

Gemäss weiteren Ausführungsbeispielen erfolgt eine Betätigung der Klappe durch eine Sendung oder ein sonstiges Stückgut des unteren Stückgutstroms selber. Somit ist kein zusätzlicher Aktor für die Klappe oder die Vorrichtung erforderlich.

Gemäss diesen Ausführungsbeispielen erfolgt keine Aktivierung oder Betätigung durch Absenken der Klappe durch das Eigengewicht eines auf der Klappe aufliegenden Stückgutes.

Gemäss weiteren Ausführungsbeispielen basiert die Erfindung auf dem Wirkprinzip eines Anhebens der Klappe durch die Sendungen des unteren Stückgutstroms und ergänzend (optional) ein "Spalt in der Grundposition" (z. B. durch einen unteren Anschlag der Klappe), so dass "flache" und insbesondere "flache, flimmsige" Sendungen bzw. Tüten die Klappe / Vorrichtung gar nicht anheben müssen.

Gemäss weiteren Ausführungsbeispielen Klappe / Vorrichtung gewichtskraft-kompensiert (z. B. durch ein Federelement oder durch ein Gegengewicht), so dass sie generell und insbesondere auch von großen, leichten Sendungen sicher angehoben wird. In einer Variante weist die Klappe hierfür einen geringeren Reibwert an ihrer Unterseite auf.

Gemäss weiteren Ausführungsbeispielen umfasst die untere Förderstrecke 2 und/oder die obere Förderstrecke 4 eines oder mehrere von in Speicherrutschen typischerweise ohnehin vorhandenen aktiven Brems- bzw. Transportbänder zum Vortrieb der Sendungen. Auf diese Weise müssen keine zusätzlichen Antriebe verwendet werden, da sich durch auf diesen aktiven Brems- bzw. Transportbändern geförderten Stückgütern die Klappe anheben lässt.

Gemäss weiteren Ausführungsbeispielen regelt das Kontrollsystem 8 diese (ebenen oder leicht geneigten) Brems- bzw. Transportbänder z. B. durch die Verwendung von Lichtschranken, welche die Sendungen erkennen.

Gemäss weiteren Ausführungsbeispielen ist das Kontrollsystem 8 eingerichtet, das Transportband 44 im Bereich vor der oberen Klappe so anzusteuern, um die Zufuhr von beiden Sendungsströmen 3, 5 so regeln zu können, dass Sendungen nicht gleichzeitig unter der Klappe durchfahren, während andere auf der Klappe nach unten rutschen.

Weitere Ausführungsbeispiele umfassen die Verwendung der aktiven Transportbänder und Sensoren (z. B. Lichtschranken), um die Speicherkapazität des Speicherrutschensystems zu optimieren bzw. maximal zu nutzen. Dabei kann das untere Speicherband 2 in zwei oder mehr unabhängig antreibbare Abschnitte unterteilt sein.

Gemäss einem weiteren Ausführungsbeispiel umfasst der Klappmechanismus 7 die zusätzliche, schwenkbare "kleine Klappe" mit geeigneter Kontur in Verlängerung der Klappe 76 an ihrem unteren Ende, um einen sanften Übergang der Sendungen von der Klappe auf das Transportband oder die Rutschfläche zu ermöglichen. So kann auch ein gegebenenfalls vorhandener Höhensprung bei einem "Spalt in der Grundposition" sendungsschonend überbrückt werden. Von flachen Sendungen muss dann lediglich die "kleine Klappe" angehoben werden.

Gemäss weiteren Ausführungsbeispielen umfasst ein Speicherrutschensystem eine zuverlässige, kostengünstige Lösung für einen vertikalen Merge in Rutschen bzw. Speicherrutschen ohne zusätzliche Aktoren / Antriebe (für schwenkbare, verschiebbare oder kippbare Vorrichtungen) und die damit verbundenen Sicherheitsrisiken für Personen bzw. Maßnahmen zur Absicherung der Risiken. Weitere Ausführungsbeispiele ermöglichen eine Realisierung von Rutschen für doppel- oder mehrstöckige Sorter bei minimalem Footprint und größtmöglicher Breite der Rutschen-Kanäle, was ein hohes Speichervolumen und eine maximale funktionale Sicherheit (kein Verklemmen großer Sendungen beim Abwurf in und beim Transport im Kanal) ermöglicht.

Gemäss einem Ausführungsbeispiel umfasst das Speicherrutschensystem vorzugsweise im Kontrollsystem 8 eine Regelung, um die Ströme 3, 5 geeignet zusammen zu führen, also unter anderem sendungsschonend und ohne Verklemmungen oder Staus. Zusätzlich oder alternativ dazu ist die Regelung eingerichtet, die Speicherkapazität der Rutsche zu maximieren. Dabei wird eine aktive Transportvorrichtung mindestens für den unteren Stückgutstrom verwendet, die gegebenenfalls auch noch in individuell ansteuerbare Segmente unterteilt ist, um beispielsweise unter Verwendung von Sensoren geeignet geregelt werden zu können.

Gemäss einem Ausführungsbeispiel kommen die Stückgutströme 3, 5 jeweils von einem Sorter 11, 12, so dass die Stückgutströme 3, 5 auch direkt über die Sorter 11, 12 und/oder über von den Sortern 11, 12 generierte Abwurfsignale, die in ihrer ursprünglichen Funktion dazu verwendet werden, Stückgüter von den Sortern 11, 12 in das Speicherrutschensystem abzuwerfen, geregelt werden können. Gemäss weiteren Ausführungsbeispielen können für die optimale Regelung auch Sendungskriterien verwendet werden, die dem Sorter ohnehin bereits vorliegen. Beispielsweise können die Sorter 11, 12 dem Kontrollsystem 8 die Masse von Sendungen 9 übermitteln, um bei geringer Masse einer Sendung die Zufuhr in den oberen Strom 5 zuzulassen, auch wenn der Transportbereich des unteren Stroms 3 gefüllt ist, weil bei dem Auftreffen von leichten Sendungen auf Sendungen im unteren Strom die Gefahr von Beschädigungen nur sehr gering ist.

In weiteren Ausführungsbeispielen können auch die Abmessungen der Sendungen 9 von den Sortern 11, 12 an das Kontrollsystem 8 übermittelt werden, beispielsweise zur Vermeidung von Staus, wenn ein kritischer Bereich des Speicherrutschensystems schon fast voll ist und eine sehr große Sendung von einem der Sorter 11, 12 in das Speicherrutschensystem 1, 101 abgeworfen wird.

Gemäss einem Ausführungsbeispiel wird die drehbare Klappe / Rutsche nicht (nur) durch Schwerkraftkompensation, sondern insbesondere auch durch einen festen Anschlag in einem definierten Abstand zur unteren Transportvorrichtung gehalten, damit flache und tendenziell leichte Sendungen immer ungestört unter ihr durchfahren können und die Klappe / Rutsche nicht anheben müssen. Gegenüber beispielsweise einer reinen Einstellung eines definierten Abstandes über eine Schwerkraftkompensation kann so das Risiko eines Staus insbesondere bei als leichten Folien-Sendungen oder vergleichbaren Stückgütern reduziert werden.

Gemäss einem Ausführungsbeispiel umfasst der Klappmechanismus 7 auch ein Dämpfungssystem, das ausgestaltet ist, Schwenkbewegungen der Klappe 71 um die Achse 75 und/oder der Klappe 76 um die Achse 77 zu dämpfen, um ein Überschwingen und ein zu heftiges Zurückschwingen zu vermeiden und so u. a. Sendungsbeschädigungen zu verhindern.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Zusammenführungssystem (1) zum Zusammenführen von zwei Stückgutströmen (3, 5), umfassend eine untere Förderstrecke (2), eine über der unteren Förderstrecke (2) angeordnete obere Förderstrecke (4), einen zusammengeführten Förderbereich (6) und einen Klappmechanismus (7) mit einer Klappe (71); wobei das Zusammenführungssystem (1) ausgestaltet ist, auf der unteren Förderstrecke (2) geförderte Stückgüter (9) und auf der oberen Förderstrecke (4) geförderte Stückgüter (9) dem zusammengeführten Förderbereich (6) zuzuführen;
wobei der Klappmechanismus (7) eine in der oberen Förderstrecke (4) angeordnete Achse (72) umfasst, um welche die Klappe (71) schwenkbar angeordnet ist, sodass eine obere Seite (73) der Klappe (71) Teil einer Förderfläche der oberen Förderstrecke (4) bildet;
wobei der Klappmechanismus (7) eine Grundposition umfasst, in welcher die Klappe (71) von der Achse (72) zu dem der Achse gegenüberliegenden Ende (75) hin auf die untere Förderstrecke (2) zulaufend angeordnet ist und in welcher auf der oberen Förderstrecke (4) geförderte Stückgüter (94) via die obere Seite (73) der Klappe (71) in einer Richtung von der Achse (72) zu dem der Achse gegenüberliegenden Ende (75) der Klappe (71) dem zusammengeführten Förderbereich (6) zuführbar sind; wobei der Klappmechanismus (7) und die untere Förderstrecke (2) ausgestaltet und relativ zueinander so angeordnet sind, dass die Klappe (71) durch die Wirkung eines oder mehrerer auf der unteren Förderstrecke (2) geförderter Stückgüter (92) angehoben wird und das eine oder die mehreren auf der unteren Förderstrecke (2) geförderten Stückgüter (92) unter der Klappe (71) hindurch dem zusammengeführten Förderbereich (6) zugeführt werden;
das Zusammenführungssystem (1) zudem umfassend ein Kontrollsystem (8) und mindestens ein ansteuerbares unteres Antriebsmittel (82) zum Antreiben der unteren Förderstrecke (2); wobei das Kontrollsystem (8) eingerichtet ist, das untere Antriebsmittel (82) so anzusteuern, dass das Zuführen von Stückgütern (9) von der oberen Förderstrecke (4) zu dem zusammengeführten Förderbereich (6) und das Zuführen von Stückgütern (9) von der unteren Förderstrecke (2) an den zusammengeführten Förderbereich (6) koordiniert vorgenommen wird.

2. Zusammenführungssystem (1) nach Anspruch 1, wobei die Klappe (71) keine aktiv angetriebenen Elemente zum Fördern von auf der Klappe (71) geförderten Stückgütern (94) umfasst.

3. Zusammenführungssystem (1) nach einem der vorhergehenden Ansprüche, umfassend ein ansteuerbares oberes Antriebsmittel (84) zum Antreiben der oberen Förderstrecke (4);
wobei das Kontrollsystem (8) eingerichtet ist, das obere Antriebsmittel (84) so anzusteuern, dass das Zuführen von Stückgütern (94) von der oberen Förderstrecke (4) an den zusammengeführten Förderbereich (6) und das Zuführen von Stückgütern (9) von der unteren Förderstrecke (2) an den zusammengeführten Förderbereich (6) koordiniert vorgenommen wird.

4. Zusammenführungssystem (1) nach einem der vorhergehenden Ansprüche, wobei der Klappmechanismus (7) ausgestaltet ist, dass auf der oberen Seite der Klappe (71) aufliegende Stückgüter (94) zumindest dann, wenn der Klappmechanismus (7) sich in der Grundposition befindet, schwerkraftgetrieben dem zusammengeführten Förderbereich (6) zugeführt werden.

5. Zusammenführungssystem (1) nach einem der vorhergehenden Ansprüche, wobei die Klappe (71) als Gleitelement ausgestaltet ist.

6. Zusammenführungssystem (1) nach einem der vorhergehenden Ansprüche, wobei die obere Seite der Klappe (71) einen höheren Reibewert aufweist als die untere Seite der Klappe (71).

7. Zusammenführungssystem (1) nach einem der vorhergehenden Ansprüche, wobei der Klappmechanismus (7) ein Gewichts-Kompensationssystem umfasst, welches bewirkt, dass die Klappe (71) durch die Wirkung eines auf der unteren Förderstrecke (2) geförderten Stückgutes (92), das zu leicht wäre, um das Gewicht der Klappe (71) ohne Gewichtskompensationssystem anzuheben, angehoben wird.

8. Zusammenführungssystem (1) nach einem der vorhergehenden Ansprüche, wobei der Klappmechanismus (7) ausgestaltet ist, dass in der Grundposition ein vorgegebener freier Spalt (31) zwischen dem Klappmechanismus (7) und der unteren Förderstrecke (2) besteht, unter welchem ein ausreichend kleines Stückgut (91) auf der unteren Förderstrecke (2) hindurch förderbar ist, ohne dass die Klappe (71) durch die Wirkung des ausreichend kleinen Stückgutes (91) angehoben wird.

9. Zusammenführungssystem (1) nach einem der vorhergehenden Ansprüche, wobei der Klappmechanismus (7) eine zusätzliche Klappe (76) umfasst, die an dem der Achse (72) gegenüber liegenden Ende (75) der Klappe (71) schwenkbar befestigt ist, und der Klappmechanismus (7) ausgestaltet ist, dass die zusätzliche Klappe (76) durch die Wirkung eines oder mehrerer auf der unteren Förderstrecke (2) geförderter Stückgüter (91, 92) angehoben wird und das eine oder die mehreren auf der unteren Förderstrecke (2) geförderten Stückgüter (91, 92) unter der angehobenen zusätzlichen Klappe (76) hindurch dem zusammengeführten Förderbereich (6) zugeführt werden.

10. Zusammenführungssystem (1) nach einem der vorhergehenden Ansprüche, wobei die untere Förderstrecke (2) mehrere individuell antreibbare Förderstreckensegmente (2a, 2b, 2c) umfasst, und das untere Antriebsmittel mehrere individuell ansteuerbare Segmentantriebe (82a, 82b, 82c) zum Antreiben der Förderstreckensegmente (2a, 2b, 2c) umfasst;
wobei das Kontrollsystem (8) eingerichtet ist, die Segmentantriebe 82a, 82b, 82c) so anzusteuern, dass das Fördern von Stückgütern (9) auf der unteren Förderstrecke (2) koordiniert wird, um das Zuführen von Stückgütern von der oberen Förderstrecke (4) und der unteren Förderstrecke zu dem zusammengeführten Förderbereich (6) koordiniert vorzunehmen.

11. Zusammenführungssystem (1) nach einem der vorhergehenden Ansprüche, wobei die untere Förderstrecke (2) den zusammengeführten Förderbereich (6) zumindest teilweise umfasst.

12. Fördersystem (10), umfassend mindestens ein Zusammenführungssystem (1) gemäss einem der vorhergehenden Ansprüche, sowie ein oberes Zuführsystem (12) und ein unteres Zuführsystem (11);
wobei das obere Zuführsystem (12) und das untere Zuführsystem (11) jeweils mindestens einen Ausgang (16, 17) umfassen; wobei ein Ausgang (17) des oberen Zuführsystems (12) ausgestaltet ist, einem stromaufwärts der Klappe (71) angeordneten Eingang (47) der oberen Förderstrecke (4) Stückgüter (9) zuzuführen und ein Ausgang (16) des unteren Zuführsystems (11) ausgestaltet ist, einem stromaufwärts der Klappe (71) angeordneten Eingang (27) der unteren Förderstrecke (2) Stückgüter (9) zuzuführen.

13. Verfahren zum Zusammenführen von zwei Stückgutströmen (3, 5), umfassend die Verfahrensschritte:
- Fördern eines unteren Stückgutstroms (3) auf einer unteren Förderstrecke (2);
- Fördern eines oberen Stückgutstroms (5) auf einer über der unteren Förderstrecke (2) liegenden oberen Förderstrecke (4);
- Zuführen von in dem oberen Stückgutstrom (5) geförderten Stückgütern in einen zusammengeführten Förderbereich (6) via eine obere Seite (73) einer schwenkbaren Klappe (71);
- Zuführen von in dem unteren Stückgutstrom (3) geförderten Stückgütern in den zusammengeführten Förderbereich (6) indem die Klappe (71) durch die Wirkung eines oder mehrerer auf der unteren Förderstrecke (2) geförderter Stückgüter (92) angehoben wird und das eine oder die mehreren auf der unteren Förderstrecke (2) geförderten Stückgüter (92) unter der Klappe (71) hindurch dem zusammengeführten Förderbereich (6) zugeführt werden;
- wobei ein Antriebsmittel (82) der unteren Förderstrecke (2) durch ein Kontrollsystem (8) so angesteuert wird, dass Stückgüter (9) von der oberen Förderstrecke (4) und der unteren Förderstrecke koordiniert dem zusammengeführten Förderbereich (6) zugeführt werden.

14. Verfahren nach Anspruch 13, wobei ein Antriebsmittel (84) der oberen Förderstrecke (4) durch das Kontrollsystem (8) so angesteuert wird, dass Stückgüter (9) von der oberen Förderstrecke (4) und der unteren Förderstrecke koordiniert dem zusammengeführten Förderbereich (6) zugeführt werden.

15. Verfahren nach Anspruch 13 oder 14, wobei das Zuführen von in dem oberen Stückgutstrom (5) geförderten Stückgütern in einen zusammengeführten Förderbereich (6) via eine obere Seite (73) einer schwenkbaren Klappe (71) umfasst, dass die in dem oberen Stückgutstrom (5) geförderten Stückgüter auf der oberen Seite (73) der Klappe (71) gleiten.
